(19) Europäisches Patentamt
European Patent Office
Office européen des brevets

(11) **EP 2 687 831 B1**

(12) **EUROPEAN PATENT SPECIFICATION**

(45) Date of publication and mention of the grant of the patent:
**13.05.2015 Bulletin 2015/20**

(21) Application number: **12761524.3**

(22) Date of filing: **19.03.2012**

(51) Int Cl.:
*G01H 3/00* *(2006.01)*          *G01S 3/808* *(2006.01)*

(86) International application number:
**PCT/JP2012/001897**

(87) International publication number:
**WO 2012/127850 (27.09.2012 Gazette 2012/39)**

(54) **NOISE MONITORING DEVICE AND NOISE MONITORING METHOD**

RAUSCHÜBERWACHUNGSVORRICHTUNG UND RAUSCHÜBERWACHUNGSVERFAHREN

DISPOSITIF DE SURVEILLANCE DU BRUIT ET PROCÉDÉ DE SURVEILLANCE DU BRUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2011 JP 2011061280**

(43) Date of publication of application:
**22.01.2014 Bulletin 2014/04**

(73) Proprietor: **Rion Co., Ltd.**
**Tokyo 185-8533 (JP)**

(72) Inventors:
• **OKAZAKI, Michinari**
**Kokubunji-shi**
**Tokyo 185-8533 (JP)**
• **MOTOYOSHI, Junichi**
**Kokubunji-shi**
**Tokyo 185-8533 (JP)**
• **SAKODA, Keishi**
**Kokubunji-shi**
**Tokyo 185-8533 (JP)**
• **SHINOHARA, Kenji**
**Kokubunji-shi**
**Tokyo 185-8533 (JP)**
• **TAZAKI, Masaru**
**Hachioji-shi**
**Tokyo 192-0918 (JP)**

(74) Representative: **Isarpatent**
**Patent- und Rechtsanwälte**
**Friedrichstrasse 31**
**80801 München (DE)**

(56) References cited:
WO-A1-02/29432          WO-A1-2004/021031
DE-A1- 10 207 824          JP-A- 7 043 203
JP-A- 9 105 667          JP-A- H09 105 667
JP-A- 2006 038 772          JP-A- 2006 038 772

• KEISHI SAKODA ET AL.: 'Measurement using environmental sound monitor' PROCEEDINGS OF THE MEETING THE INSTITUTE OF NOISE CONTROL ENGINEERING OF JAPAN vol. 2010, 28 September 2010, SHUKI, pages 107 - 110
• KENJI FUKUSHIMA: 'Aircraft Noise Identification' JOURNAL OF THE GAS TURBINE SOCIETY OF JAPAN vol. 33, no. 6, 20 November 2005, pages 604 - 605

EP 2 687 831 B1

## Description

### Technical Field

The present invention relates to a noise monitoring apparatus and a noise monitoring method which are suitable for use in an environment where a flyover noise of an aircraft and a ground noise are mixed in a monitoring target area.

### Background Art

JP 2006 038772 A discloses a sound pressure measuring method. Noise levels are measured at a noise measuring point. In parallel therewith, a sound source search device performs observation in a direction in which sound arrives from the periphery. A noise level at each moment and the direction of an arriving dominant sound are estimated to determine a sound source.

JP H09 105667 A relates to continuously monitoring for factory noise. The range of a factory at a measuring point is designated with azimuth. It is determined whether a sound source is moving or not and whether the source is generated from the factory side or not based on the result of the regression analysis by the method of least squares. A moving sound source such as a road traffic noise and noise generated out of the factory are removed, and an index to be evaluated for the factory noise is obtained.

Conventionally, for example, there is known a prior art effective for automatically discriminating a flyover noise of an aircraft, which is monitored under a flight route of an aircraft or the like (see, for example, Japanese Patent Application Laid-open No. H7-43203; see Patent Document 1). This prior art calculates an elevation angle and an angle of direction of a sound source by using a flyover noise discrimination technique by correlation method, and turns them into an arrival direction vector of the moving sound source for automatically discriminating the movement trajectory of the moving sound source from an obtained set of vectors.

The discrimination technique of the prior art enables that, even at a monitoring site which is influenced by noises of aircrafts taking off or landing on airports at plural locations, the influence of the noise of the aircraft taking off or landing from each airport is each discriminated and comprehended accurately, so as to discriminate a movement course of the aircraft with high accuracy.

Prior Art Document

Patent Document

Patent Document 1: Japanese Patent Application Laid-open No. H7-43203.

## Summary of the Invention

Problems to be Solved by the Invention

Monitoring of noise which occurs accompanying operation of an aircraft or the like is only necessary hitherto to monitor a flyover noise such as a noise from the flyover, a taking-off runway noise occurring on a runway, and a reverse noise during landing, but currently (from now on), it is necessary to monitor a ground noise of an aircraft which occurs accompanying operation of the aircraft in an airport, maintenance of an aircraft body, and so on in the periphery of the airport. Examples of the ground noise include a noise generated by an aircraft being parked due to operation of an auxiliary power unit (APU), a noise generated by an aircraft still due to propulsion while moving between a terminal and a runway (taxiing), and further a noise generated in the case where an aircraft performs an engine run-up operation in an engine run-up operations area in the airport, or the like.

Moreover, noises monitored in the periphery of an airport are complicated, and various noises of an automobile, a siren, and so on come to a monitoring site in a mixed manner from the periphery. Thus, it is difficult to perform pinpoint detection of only a ground noise generated by an aircraft in a manner that the noise is discriminated from other noises from the ground.

Further, aircraft noises include transient single event noises which occur singly and monitored in an airport accompanying operation of an aircraft, semi-stationary noises which continue for a long time and are stationary but accompany a considerable level fluctuation, such as a noise of an engine run-up operation or APU operation monitored in the periphery of an airport accompanying maintenance of an aircraft, or the like, which make it further difficult to discriminate a noise.

The present invention provides a technology capable of corresponding to determination of a noise generated by an aircraft or the like even in a complicated noise environment such as the periphery of an airport.

### Means for Solving the Problems

The present invention uses a window determination technique for determining (discriminating) a noise in addition to the flyover noise discrimination technique by correlation method. The window determination technique demarcates areas which correspond to sources of noises based on a positional relation with an actual monitoring site, defines the demarcated area as window areas in the monitoring space, and thereby determines that, when an arrival direction vector of a noise is within the window area, the noise is generated from the area corresponding to the window area.

Thus, the noise monitoring apparatus includes a calculating means, a window area defining means, and a determining means besides a detecting means. A noise monitoring method is executed by using such a noise monitoring apparatus.

The detecting means executes a step of detecting, with reference to a monitoring site set in a target area for monitoring noises, a noise coming to the monitoring site. That is, the detecting means detects not only an A-weighted sound pressure level but also the arrival direction of a sound seen from the monitoring site, for example. The calculating means executes a step of calculating a direction vector of a noise which came to the monitoring site within a monitoring space with reference to the monitoring site based on a detection result of the detecting means. When the determining means executes a determination step, the window area defining means demarcates areas which correspond to sources of noises in the target area based on a relative positional relation with the monitoring site, and defines the demarcated areas as window areas in the monitoring space. Further, when the window areas are defined, the determining means executes a step of determining that a noise has occurred from the area corresponding to the window area in the target area when the calculated arrival direction vector is included in the window areas.

Thus, even in an environment where various complicated noises occur, when many arrival direction vectors of noises exist in a window area corresponding to a noise source area, they can be discriminated as noises occurring from this area.

Further, in the present invention, by defining an individual window area for each of plural areas to be noise sources of different types, it is also possible to perform determination including what type of noise it is when a noise occurs. That is, when the window areas are defined, plural areas which differ in types of generating noises from each other are individually demarcated based on a relative positional relation with the monitoring site, and the plural demarcated areas, which are sources of noises of inherent types, are defined in the monitoring space as the plural window areas respectively which correspond individually thereto. Then, when executing the step of window determination, the determining means identifies, when the calculated arrival direction vector is included more than or equal to a predetermined ratio threshold (more than or equal to a threshold represented by a ratio) in the plurality of window areas, which of the window areas includes the arrival direction vector at a highest ratio, and thereby determines that a noise of an inherent type has occurred in the area corresponding to the identified window area.

Thus, in an environment where various types of noises occur, it is possible to discriminate a noise with high accuracy including what type of noise it is in addition to determining that the noise occurs from a specific area.

Note that in the present invention, it is possible to define the window areas by a range of an elevation angle from a horizontal plane set in the monitoring space with reference to the monitoring site and a range of an angle of direction relative to a reference azimuth set in the monitoring space with reference to the monitoring site.

For example, when the arrival direction vector to be calculated is represented by an elevation angle $\theta$ and an angle of direction $\delta$, if vector elements thereof correspond to a coordinate system of the window areas, calculation processing accompanying the determination becomes easy, and a calculation load can be reduced.

Further, in the present invention, it is also possible to discriminate a noise coming to the monitoring site as a ground noise of an aircraft based on a positional relation between the calculated arrival direction vector and the window areas.

Thus, by utilizing determination of a ground noise by the window determination technique together with the existing flyover noise discrimination technique by correlation method, they can be realized as a monitoring apparatus and a monitoring method which are more convenient.

Effects of the Invention

By the noise monitoring apparatus and the noise monitoring method of the present invention, it is possible not only to discriminate a flyover noise of an aircraft but also to easily discriminate a ground noise of an aircraft even in a target area where noises from the ground occur in a complicated manner.

**Brief Description of Drawings**

Fig. 1 is a schematic diagram illustrating one embodiment of the case where a noise monitoring apparatus is installed in an airport;
Fig. 2 is a diagram schematically illustrating a structure of the noise monitoring apparatus and a flyover noise discrimination technique by a correlation method;
Fig. 3 is a diagram illustrating a relative positional relation between an area to be the source of a ground noise in the airport and a monitoring site;
Fig. 4 is a diagram explaining a noise event detecting method for a single event noise together with a temporal change of A-weighted sound pressure level under a flight route;
Fig. 5 is a diagram explaining the noise event detecting method for a semi-stationary noise together with a temporal change of A-weighted sound pressure level in the airport (or vicinity);
Fig. 6 is a flowchart illustrating a procedure example of noise measurement processing executed by a monitoring unit of the noise monitoring apparatus; and
Fig. 7 is a diagram schematically illustrating a window determination technique by a vector discriminating unit.

**Modes for Carrying Out the Invention**

Hereinafter, embodiments of the present invention will be described with reference to the drawings.

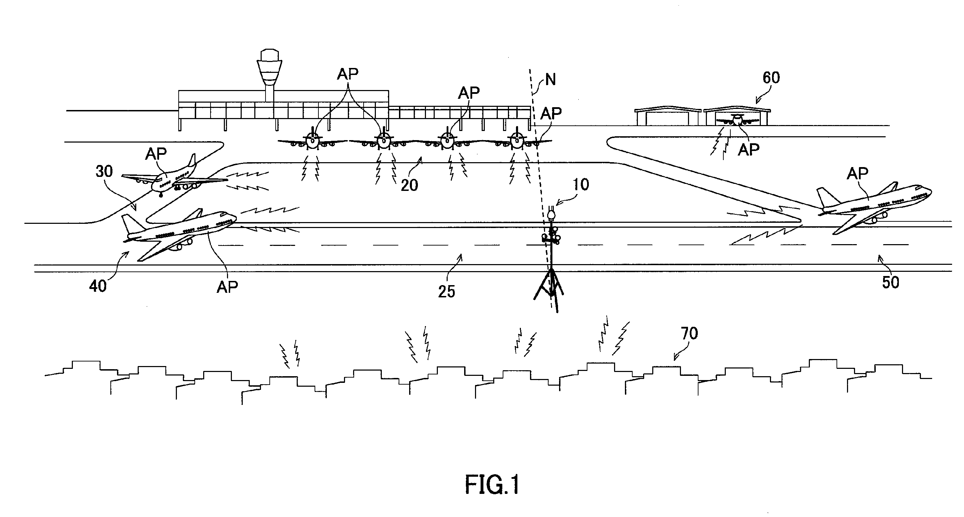

Fig. 1 is a schematic diagram illustrating one embodiment of the case where a noise monitoring apparatus is installed in an airport. In a target area such as an airport (or a surrounding area thereof), there is formed a noise environment in which, besides a noise coming from the flyover accompanying flight of an aircraft, and a takeoff and landing running noise and a reverse noise at the time of landing which occur on a runway (hereinafter referred to as a "flyover noise"), a noise accompanying operation of an aircraft and maintenance of an aircraft body and a noise accompanying taxiing, engine run-up operations, operation of an APU, and so on in the airport (hereinafter referred to as a "ground noise") are mixed.

As illustrated in Fig. 1, the noise monitoring apparatus can be used in a state that a microphone unit 10 is disposed at a monitoring site in the airport. Further, a not-illustrated monitoring unit is connected to the microphone unit 10.

In the airport as the target area, areas to be noise sources exist at various locations such as, for example, a landing aircraft 40 or a taking-off aircraft 50 running on an apron 20, a taxiway 30, or a runway 25, and an engine run-up operations area 60. In the airport, various noises occur from these locations, and come from their respective directions to the monitoring site. The noise monitoring apparatus of this embodiment can automatically detect the noise coming to the monitoring site by using the microphone unit 10. The areas to be noise sources will be described by location below.

[APU]

From the apron 20, a noise accompanying operation of an auxiliary power unit (APU) occurs. Note that the auxiliary power unit is a small engine used as a power source supplying compressed air, hydraulic pressure, electric power, and/or the like to an aircraft AP being parked.

[Taxiing]

The taxiway 30 is a path on which the aircraft AP moves between the apron and the runway 25. In the aircraft AP which is taxiing, an engine is operating so as to obtain driving power needed for a ground run, which generates a noise.

[Landing Noise]

The landing aircraft 40 generates a noise accompanying operation of the aircraft AP through descending toward and landing on the runway 25 upon arrival, further performing reversing of the engine on the runway 25 in many cases for decelerating, and finally exiting the runway 25.

[Take-off noise]

The taking-off aircraft 50 generates a noise accompanying operation of the aircraft AP through starting to glide at a starting end of the runway 25 at the time of departure, lifting and ascending in middle of the runway 25, and flying away.

[Engine Run-up Operations]

Further, in the engine run-up operations area 60, a noise occurs accompanying test driving for confirming operation of the engine (main engine) of the aircraft AP.

Note that although not illustrated in Fig. 1, besides the above noise, the following noise occurs in the airport.

[Touch and Go]

For the purpose of a takeoff and landing training or the like, when the aircraft AP is in, for example, a flight mode to enter the runway 25, land, decelerate, and thereafter increase the engine output to take off again (touch and go), a noise accompanying this series of operation occurs.

[Hovering]

When a helicopter is in a flight mode to hover substantially statically, a noise occurs accompanying this.

[Urban Area]

Besides the above, when there is an urban area 70 for example in surroundings of the airport, other noises from the ground occur accompanying various social activities in the urban area 70 (operation of transportation facilities, road traffics, civil lives, and so on).

[Positional Relation with the Monitoring Site]

The microphone unit 10 is installed as a monitoring site at one position (which may be plural positions) in the airport, for example. When the north (N) is defined with reference to this monitoring site, the apron 20 is located, for example, from the north-northwest (NNW) to the northwest (NW). Further, the taxiway 30 is located from the northwest (NW) to the west-northwest (WNW), and the runway 25 is located, for example, from the west-northwest (WNW) to the east-northeast (ENE). Further, the engine run-up operations area 60 is located in the northeast (NE), for example.

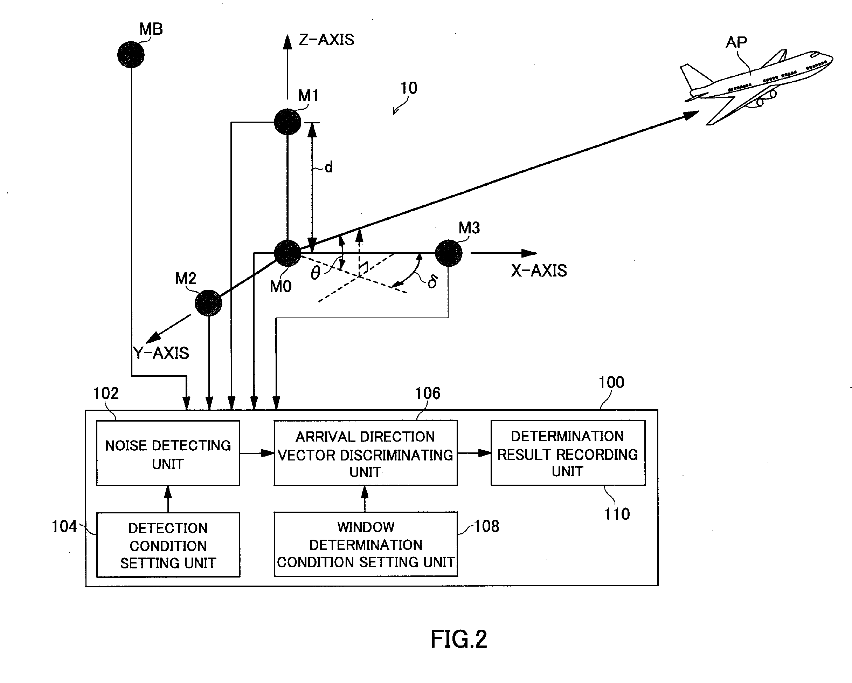

Fig. 2 is a diagram schematically illustrating a structure of the noise monitoring apparatus and a flyover noise discrimination technique by a correlation method. The noise monitoring apparatus has a function to perform calculation processing using the microphone unit 10, and discriminating a flyover noise by the correlation method.

[Microphone Unit]

The microphone unit 10 is structured to include four microphones M0, M1, M2, M3 for example, and the individual microphones M0 to M3 are disposed on an X-axis, a Y-axis, and a Z-axis and at the origin of three-axis coordinates which are defined virtually. Specifically, the microphone M0 is disposed at the origin, and another microphone M1 is disposed on the Z-axis extending in a vertical direction from the origin. Further, another microphone M2 is disposed on the Y-axis extending in a horizontal direction from the origin and forming a 90° angle with the X-axis, and another microphone M3 is disposed on the X-axis extending in a horizontal direction from the origin. The microphone unit 10 fixes the individual microphones M0 to M3 mechanically, and maintains the relative positional relation (three-axis correlation) of the microphones M0 to M3 in its installed state.

Besides them, the microphone unit 10 includes another microphone MB different from the above-described four microphones M0 to M3. While the four microphones M0 to M3 are for discriminating the flyover noise by the correlation method, the microphone MB is for monitoring a noise. The microphone MB is used solely for monitoring an A-weighted sound pressure level at the monitoring site, for example.

[Monitoring Unit]

The noise monitoring apparatus includes a monitoring unit 100, and the microphone unit 10 is connected to this monitoring unit 100. The monitoring unit 100 is formed of a computer apparatus including, for example, a central processing unit (CPU), a semiconductor memory (ROM, RAM), a hard disk drive (HDD), an input/output interface, a liquid crystal display, and so on, which are not illustrated.

[Flyover Noise Discrimination Technique by Correlation Method]

Next, the flyover noise discrimination technique by the correlation method using the four microphones M0 to M3 will be described. Note that the flyover noise discrimination technique by the correlation method is publicly known already, and thus an overview thereof will be described here.

For example, when the two microphones M1, M0 are disposed vertically on the vertical line (Z-axis), the interval therebetween is represented by d(m). Then, when a sound of the flying aircraft AP enters at an elevation angle θ, a time difference τ(s) for this sound to reach the two microphones M1, M0 is represented by the following equation (1) with the sonic velocity being c (m/s).

$$\tau = d/c \cdot \sin(\theta) \quad \dots \quad (1)$$

Then, with the above equation (1), the elevation angle θ of the sound source seen from the monitoring site can be obtained.

When it is conceivable that the arrival direction of the sound is sufficiently higher on the flyover side (θ > 0), information of this elevation angle θ can be used for discriminating a flyover noise (see Patent Document 1 cited in the Prior Art). That is, for example, when the A-weighted sound pressure level detected by the microphone MB exceeds a certain threshold (a noise event occurs), simultaneous recording of elevation angle changes θ(t) at every moment as noise arrival direction data enables to determine a noise of sound arrival direction data larger than a pre-specified elevation angle as a flyover noise caused by the aircraft AP.

[Calculation of Arrival Direction Vector]

Further, when the arrival direction of sound is spread not only in the vertical direction but in a correlation between the three axes, the X-Y axis, the Y-Z axis, and the Z-X axis with each other, it is possible to obtain by calculation an angle of direction δ in addition to the elevation angle θ. Then, by obtaining these elevation angle θ and angle of direction δ, an arrival direction vector (unit vector) of a noise within the three-axis monitoring space (vector space) with reference to the monitoring site can be calculated. Further, with an outer product of the calculated arrival direction vector, it is possible to know the movement direction (from which direction to which direction it proceeded) of the sound source (aircraft AP) more reliably with reference to the monitoring site.

[Application of the Flyover Noise Discrimination Technique to Ground Noise Discrimination]

When the three-axis arrival direction vector of a sound can be calculated as described above, if the elevation angle θ points at a ground position, it is possible to discriminate the arrival direction of a noise from the ground from the angle of direction δ thereof. Whether the noise from the ground is generated from the aircraft AP can be discriminated by a relation between values of the elevation angle θ and the angle of direction δ and window areas which are registered in advance. Hereinafter, a ground noise monitoring method (window discrimination technique) used in this embodiment will be described.

[Structure as the Noise Monitoring Apparatus]

The monitoring unit 100 has, as its functional elements, a noise detecting unit 102, a detection condition setting unit 104, an arrival direction vector discriminating unit 106, a window determination condition setting unit 108, and a determination result recording unit 110.

Among them, the noise detecting unit 102 detects an A-weighted sound pressure level on the ground occurring in a target area based on, for example, noise detection signals from the microphones MB, M0 to M3, or the like. Specifically, the result of digitally converting a noise detection signal is sampled, and an A-weighted sound pressure level value (dB) at the monitoring site is calculated.

[Single Event Noise/Semi-Stationary Noise]

As noises of aircraft, there are two major types of single event noise and semi-stationary noise. Among them, the single event noise is a transient noise which occurs singly, and a noise monitored in the periphery of an airport accompanying operation of an aircraft AP corresponds to this type. Further, in the case of a ground noise, a noise of taxiing is often monitored as the single event noise.

The semi-stationary noise is a noise which continues for a long time and is stationary but accompanies a considerable level fluctuation. When it is generated from an aircraft, the semi-stationary noise is assumed as a ground noise of the aircraft. Noises which fall under this type are an engine run-up operation noise monitored in the periphery of an airport accompanying maintenance of the aircraft AP, an operating noise of the APU, a noise when an aircraft is on standby at an end of runway before taking off, and the like. Further, a noise of idling or hovering of a helicopter often continues in a stationary manner, and can be monitored as the semi-stationary noise.

In the detection condition setting unit 104, the condition (threshold level) for detecting a noise event of single event noise or semi-stationary noise from the A-weighted sound pressure level value is registered. The noise detecting unit 102 can subject the calculated A-weighted sound pressure level value (dB) to the condition read from the detection condition setting unit 104 so as to detect an event of flyover noise or ground noise of single event noise, or detect a ground noise event of semi-stationary noise. Note that an example of detecting the noise event will be described in more detail later.

The arrival direction vector discriminating unit 106 calculates an arrival direction vector (elevation angle $\theta$, angle of direction $\delta$) of a sound by the above-described three-axis correlation method based on detection signals from the four microphones M0 to M3. Further, the arrival direction vector discriminating unit 106 records the elevation angle $\theta(t)$ and the angle of direction $\delta(t)$ represented by a time function as sound arrival direction data.

The window determination condition setting unit 108 stores a condition regarding window determination which is registered in advance within the airport. The condition regarding window determination is defined in advance as an area (window area) in which it is assumed that a ground noise (APU sound, taxiing sound, engine run-up operation sound, hovering) from an aircraft AP would come in a monitoring space with reference to the monitoring site, for example. Such a window area can be defined based on a relative positional relation between the actual airport and the monitoring site (reference point of the microphone unit 10). Note that the definition of the window area will be further described later.

Therefore, when it obtains the condition of window determination (window area) from the window determination condition setting unit 108, the arrival direction vector discriminating unit 106 subjects the calculated arrival direction vector ($\theta$, $\delta$) to the window area to thereby determine (discriminate) a noise as a ground noise generated from an area corresponding to the window area in the airport.

The determination result recording unit 110 records the above-described determination result (result of window determination) and outputs the recorded contents in response to a request from the outside.

[Positional Relation between the Monitoring Site and Noise Occurring Area]

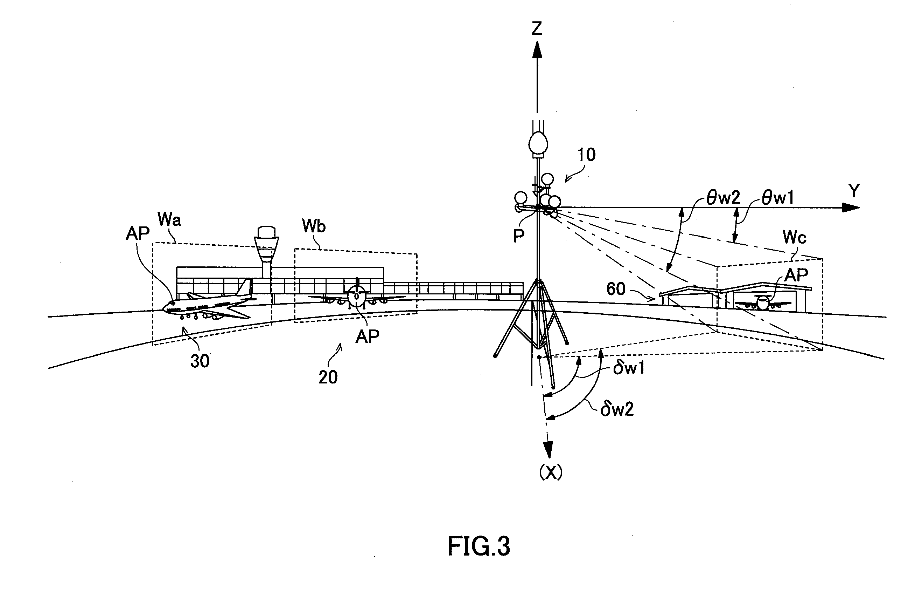

Fig. 3 is a diagram illustrating a relative positional relation between an area to be the source of a ground noise in the airport and the monitoring site.

When seen from the viewpoint of an arrival direction of noise, the area corresponding to the noise source can be defined only with the direction (range of angle of direction) corresponding to the noise source and the height (range of elevation angle), irrespective of the distance from the disposition location of the microphone unit 10 (monitoring site) to the noise occurring area.

[Definition of the Window Area]

For example, as described above, the engine run-up operations area 60 is located in the north east (NE) direction from the disposition location of the microphone unit 10 (monitoring site). This means that, specifically, one area to be the noise source exists in the north east (NE) direction with reference to the monitoring site in the airport. In practice, it is necessary to consider the largeness (width and height) of the engine run-up operations area 60. Thus, when this area is virtually demarcated in the monitoring space, it is possible to define a window area Wc to an extent that the engine run-up operations area 60 fits entirely therein in the direction from the monitoring site to the north east (NE).

[Range of the Window Area]

Further, when a monitoring site P (equivalent to the position of the microphone unit 10) is defined from a physical configuration of the microphone unit 10 (disposition relation of the microphones M0 to M3 on the three axes), the window area Wc can be defined with the range of the elevation angle from a horizontal plane passing through the monitoring site P and the range of the angle of direction.

That is, in the example illustrated in Fig. 3, when a horizontal plane including the microphone M0 is taken for example, the range of the elevation angle regarding the window area Wc is from an angle $\theta w1$ to an angle $\theta w2$ (difference between $\theta w2$ and $\theta w1$) which are seen downward from the horizontal plane.

Further, when the direction to be a reference from the monitoring site P is represented on the X-axis on the ground surface, the range of the angle of direction for the window area Wc is from an angle $\delta w1$ to an angle $\delta w2$ (difference between $\delta w2$ and $\delta w1$) when seen counterclockwise from the X-axis. It should be noted that, in Fig. 3, giving priority to easiness of reading, the X-axis is represented in the south direction.

[Definition of Other Window Areas]

Based on the same idea as the above, regarding the taxiway 30 for example, an individual window area Wa obtained by demarcating the taxiway can be defined in the monitoring space. Further, regarding the apron 20 for example, an individual window area Wb obtained by demarcating the apron can be defined in the monitoring space.

[Set Values Regarding the Window Areas]

The above is only regarding definitions of the window areas Wa to Wc seen in the monitoring space. In the above-described window determination condition setting unit 108, not only values defining a linear area such as the range of the elevation angle and the range of the angle of direction but also inherent set values can be registered as a type of noise and a noise generation mechanism in each of the window areas Wa to Wc. The inherent set values can be, for example, a "ratio threshold" and a "determined type (what ground noise it is)" for each of the window areas Wa to Wc.

For example, regarding the apron 20 and the engine run-up operations area 60 where a moving distance of the aircraft AP is relatively small, it is possible to set large values to the ratio thresholds of the window areas Wb, Wc which correspond respectively thereto. The ratio thresholds are reference thresholds for determining a result of window determination by what degree of ratio the arrival direction vector is discriminated in the window areas Wb, Wc when a noise event is detected. The determined types couple the window areas Wa to Wc to a specific event. For example, when a ground noise is discriminated in the window area Wc, it is determined as a ground noise due to engine run-up operations.

[Noise Event Detection Method]

Next, a method for detecting a noise event will be described.

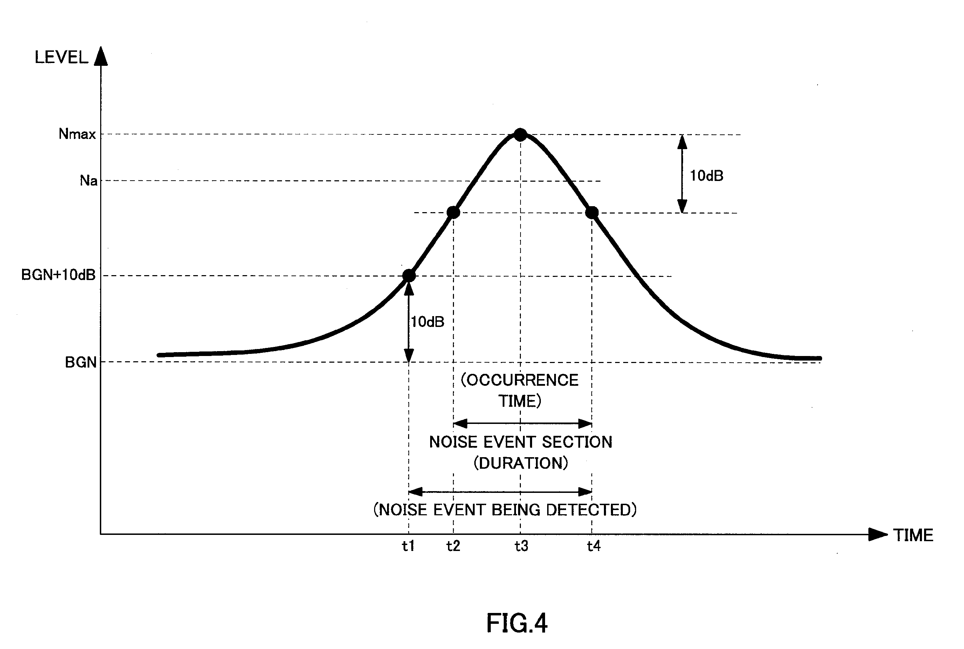

Fig. 4 is a diagram explaining the noise event detecting method for a single event noise together with a temporal change of A-weighted sound pressure level under a flight route. The monitoring unit 100 detects, for example, an A-weighted sound pressure level sequentially in the noise detecting unit 102 to thereby calculate a background noise level (BGN) at the monitoring site.

The single event noise occurs as a transient noise by passing of the aircraft AP through the above flyover, or the like as described above. Therefore, regarding the temporal change of a single event noise level, the A-weighted sound pressure level increases as the time passes, and increases to the level higher by 10 dB than the background noise level at time t1. Thereafter, the A-weighted sound pressure level reaches the maximum value (Nmax), and then becomes the background noise level (BGN) again.

In this case, the monitoring unit 100 starts to detect a noise event from time t1 in the noise detecting unit 102. That is, when the A-weighted sound pressure level of the microphone MB increases to the level higher by 10 dB than the background noise level (BGN), detection processing of the noise event is started.

In the detection condition setting unit 104, a threshold level (Na) for determining that the single event noise has occurred is set in advance. Therefore, the noise detecting unit 102 discriminates the single event noise only when the measurement value exceeds the threshold level (Na). In this example, the measurement value actually exceeds the threshold level (Na), and thus the noise detecting unit 102 can determine time t3 at which the A-weighted sound pressure level reaches the maximum value (Nmax) as the occurrence time of the single event noise.

Further, at this time, the noise detecting unit 102 determines time t4 at which the A-weighted sound pressure level decreases 10 dB from the maximum value (Nmax) as the end time of the single event noise. As a result, the period from time t1 (start time) to time t4 (end time) is a period in which the noise event is being detected (detection processing).

Then, the noise detecting unit 102 cuts out a period in which the A-weighted sound pressure level is at a level higher than a value decreased by 10 dB from the maximum value (Nmax), and determines this as a noise event section. The noise event section is assumed as a time in which the single event noise continued at the monitoring site.

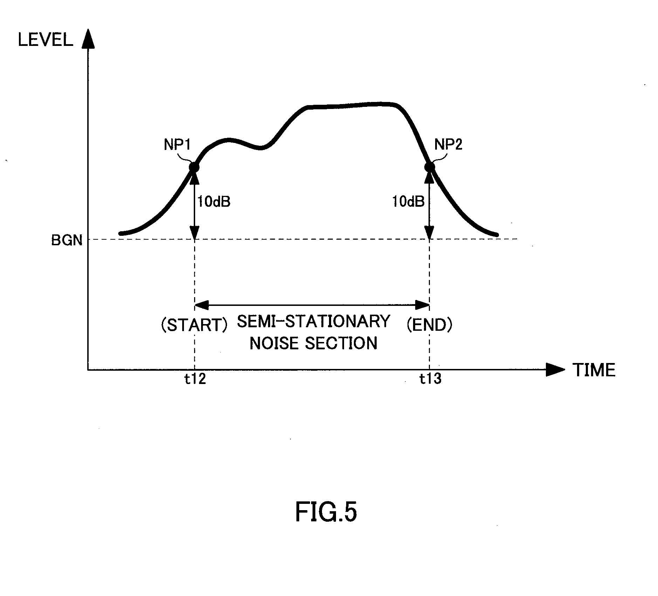

Next, Fig. 5 is a diagram explaining the noise event detecting method for a semi-stationary noise together with a temporal change of A-weighted sound pressure level in the airport (or vicinity). Also here, the monitoring unit 100 detects the A-weighted sound pressure level sequentially in the noise detecting unit 102 to thereby calculate a background noise level (BGN) at the monitoring site.

[Detection of Semi-Stationary Noise]

The case where the semi-stationary noise by the aircraft AP occurs in the airport is assumed. Before certain time t12, the measurement value at the monitoring site increases to the level (NP1) higher by 10 dB than the background noise level (BGN) by moving on the taxiway 30 or the like, for example. Thereafter, the noise further increases, and the A-weighted sound pressure level undergoes a transition while retaining the high level in a semi-stationary manner for a long time to some extent, decreases to the level (NP2) higher by 10 dB than the background noise level (BGN), and then becomes the background noise level (BGN) again.

In this case, the monitoring unit 100 starts to detect a noise event from time t12 in the noise detecting unit 102. That is, also here, when the A-weighted sound pressure level increases to the level (NP1) higher by 10 dB than the background noise level (BGN), the detection processing of the noise event is started. However, the threshold level is not set in the case of the semi-stationary noise.

Then, the noise detecting unit 102 cuts out a period in which the measurement value is at the level higher by 10 dB than the background noise level (BGN), and determines this as a noise event section. The noise event section in this case is assumed as a time in which the semi-stationary noise continued when it continued for a long time to some extent at the monitoring site.

[Noise Measurement Processing]

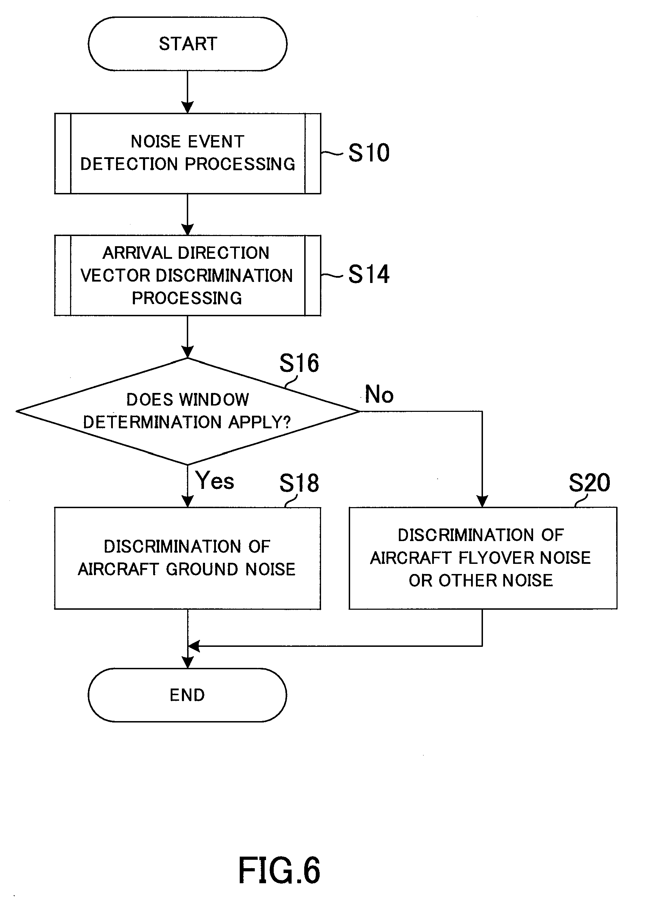

Fig. 6 is a flowchart illustrating a procedure example of noise measurement processing executed by the monitoring unit 100 of the noise monitoring apparatus. Further, in the following explanation, the contents of respective steps used in the noise monitoring method will be clear.

Step S10: the monitoring unit 100 executes noise event detection processing in the noise detecting unit 102. In this processing, the A-weighted sound pressure levels of the microphone MB and the microphones M0 to M3 are detected, and the detected A-weighted sound pressure level data and time for a predetermined time are stored in the semiconductor memory.

The stored A-weighted sound pressure level is subjected to the detection condition read from the detection condition setting unit 104, and it is determined whether or not the A-weighted sound pressure level satisfies the detection condition of the noise event.

When a single event noise or a semi-stationary noise is discriminated, the processing proceeds to next step S14.

Step S14: the monitoring unit 100 executes the arrival direction vector discrimination processing in the arrival direction vector discriminating unit 106 from the A-weighted sound pressure levels and times of the microphones M0 to M3. In this processing, the arrival direction vector (the elevation angle $\theta$, the angle of direction $\delta$) of the noise is calculated by using the three-axis correlation method as described above.

Step S16: next, the arrival direction vector discriminating unit 106 performs window determination based on the arrival direction vector. Specifically, the window areas Wa, Wb, Wc are specified in order, and the ratio of the arrival direction vector included in the noise event section in the specified window areas Wa to Wc at this moment is checked. Note that the ratio threshold read from the window determination condition setting unit 108 can be applied at this moment. When there are window areas in which the ratio of existence of the arrival direction vector is larger than the ratio threshold among the window areas Wa, Wb, Wc, the window area in which the ratio is largest among them is determined as the window area in which the noise event has occurred.

Step S18: when the window area in which the noise event has occurred can be determined in the specified window areas Wa to Wc (step S16: Yes), it is determined that the ground noise has occurred from the areas corresponding to the window areas Wa to Wc specified at that moment in the arrival direction vector discriminating unit 106. Further, the result of determination is stored in the determination result recording unit 110. At this moment, it is also possible to determine, at the same time, which of the areas corresponding to the window areas Wa to Wc the ground noise comes from, and what type of noise the ground noise corresponds to depending on whether it is the single event noise or the semi-stationary noise. The type of noise is, for example, the APU sound, the taxiing sound, the engine run-up operation sound, the hovering sound, or the like, to which a combination of each of the window areas Wa to Wc and the single event noise/semi-stationary noise corresponds.

Step S20: On the other hand, when the arrival direction vector is not included by a predetermined ratio in the specified window areas Wa to Wc (step S16: No), the noise which came to the monitoring site is discriminated as a flyover noise of an aircraft or as another noise.

[Overview of Window Determination Technique]

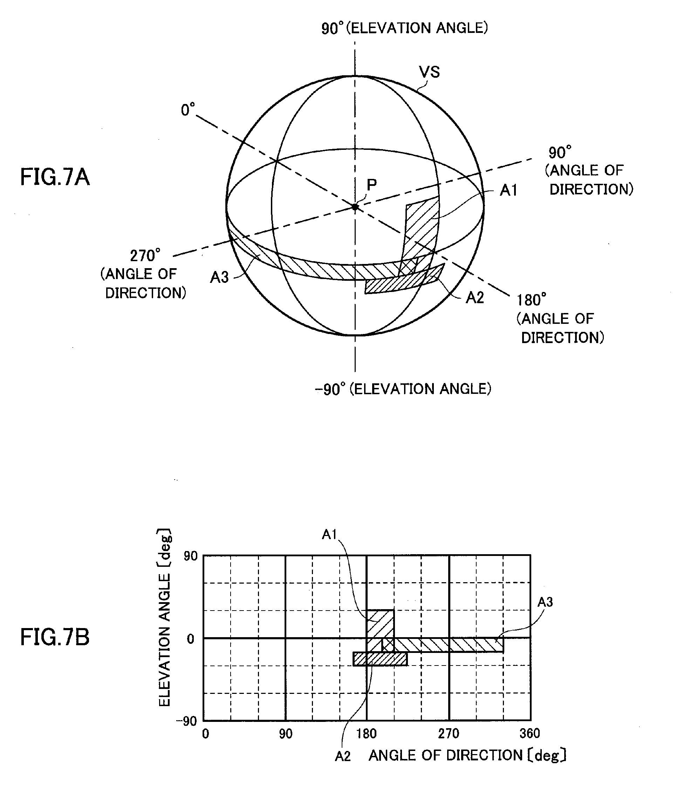

Fig. 7 is a diagram schematically illustrating a window determination technique by the arrival direction vector discriminating unit 106.

As illustrated in Fig. 7A, a virtual sphere surface VS is set with reference to the monitoring site P. For the angle of direction on a horizontal plane including the monitoring site P, the direction (for example, the north (N)) to be a reference in an actual airport is taken as a reference (0°).

Further, areas to be the source of a ground noise are demarcated in the actual airport, and the window areas are defined in the sphere surface VS. In this example, three window areas A1, A2, A3 are defined corresponding to the three areas.

In Fig. 7B, an example in which the sphere surface VS is replaced with an orthogonal coordinate system with the elevation angle θ and the angle of direction δ is illustrated. In each of the three areas A1, A2, A3, the range (width) of the angle of direction and the range of the elevation angle are defined according to characteristics of the respective corresponding actual areas.

Thus, in the window determination technique, the window areas formed to have widths specified in a vertical direction and a horizontal direction respectively from a specified coordinate position can be made as the areas A1, A2, A3 of window determination.

The inventor et al. of the present invention have proposed the following preferable detailed items in the window determination technique.

(1) When the number of vectors existing in the respective areas A1, A2, A3 of window determination is more than or equal to the specified ratio (ratio threshold) among the total number of vectors calculated in the noise event, the arrival direction vector discriminating unit 106 returns a specified determined type thereof as a result.

(2) The determined type at this moment can be selected from a flyover noise of an aircraft, a ground noise of an aircraft, and other noises.

(3) Further, the areas A1 to A3 and so on of window determination can be set arbitrarily.

(4) Further, a vector overlapped in two or more areas (for example, the area A1 and the area A3) is counted in each of the areas. In this case, the ratio of existence of the vector is calculated with the flyover noise of the aircraft and the respective areas A1 to A3 of window determination after counting the vector, and an area where the ratio is more than or equal to the ratio threshold is taken as a candidate to execute subsequent processing. For example, when flyover noise determination of the aircraft is effective, conventional processing (flyover noise discrimination technique by correlation method) is performed, or when the window determination is effective, the processing of window determination according to this embodiment is performed. Further, when plural candidates arise, processing of an area with a large ratio is executed.

(5) When there exists a noise event across specified plural window determination areas, determination of an area where the number of vectors is large is employed.

The present invention is not limited to the above-described embodiments, and can be modified and implemented in various ways. In one embodiment, an airport is the target area, but the monitoring apparatus and the monitoring method of the present invention can be used for any target area of monitoring other than airports. When the direction of an incoming noise and the characteristic of duration are known, it is possible to monitor with one apparatus by discriminating noises occurring from, for example, a train passing through a predetermined section of a railroad, an automobile passing through a predetermined section of an expressway, a factory, a construction site, and the like.

Further, the condition (background noise level ± 10 dB) and so on related to detection of noise event described in one embodiment are examples, and setting of the condition can be changed appropriately according to the target area of monitoring and characteristics of the sound source.

The window areas used for window determination may be defined not only in the orthogonal coordinate system by the elevation angle and the angle of direction but also in a polar coordinate system.

Besides them, the determined types presented in one embodiment are examples for an airport, and any other determined type may be set for performing the window determination.

## Claims

1. A noise monitoring apparatus (100), comprising :

a detecting means (10) for detecting, with reference to a monitoring site set in a target area for monitoring noises, a noise coming to the monitoring site;
a noise event detecting means (102) for detecting a noise event of a single event noise and/or a semi-stationary noise based on a detection result of the detecting means (10);
a calculating means (106) for calculating an arrival direction vector of a noise which came to the monitoring site within a monitoring space with reference to the monitoring site based on a detection result of the noise event detecting means (102);
said noise monitoring apparatus (100) **characterized in** further comprising:
a window area defining means (108) for individually demarcating plural areas which correspond to sources of noises in the target area and differ in types of generating noises from each other based on a relative positional relation with the monitoring site, and defining in the monitoring space the plural demarcated areas, which are sources of noises of inherent types, as plural window areas (Wa, Wb, Wc) respectively which correspond individually thereto by using a range of an elevation angle from a horizontal plane set in the monitoring space with reference to the monitoring site and a range of an angle of direction relative to a reference azimuth set in the monitoring space with reference to the monitoring site; and
a determining means (106) for identifying, when the arrival direction vector calculated by the calculating means (106) is included more than or equal to a predetermined ratio threshold in the plurality of window areas (Wa, Wb, Wc), which of the window areas (Wa, Wb, Wc) includes the arrival direction vector at a highest ratio, and thereby determining that a noise of an inherent type has occurred in the area corresponding to the identified window area.

2. The noise monitoring apparatus (100) according to claim 1, **characterized in that** it further comprises:

a discriminating means (106) for discriminating a noise coming to the monitoring site as a ground noise of an aircraft based on a positional relation between the arrival direction vector calculated by the calculating means (106) and the window areas (Wa, Wb, Wc).

3. A noise monitoring method, comprising:

a detecting step (S10) of detecting, with reference to a monitoring site set in a target area for monitoring noises, a noise coming to the monitoring site;
a noise event detecting step (S10) of detecting a noise event of a single event noise and/or a semi-stationary noise based on a detection result of the detecting step (S10);
a calculating step (S 14) of calculating an arrival direction vector of a noise which came to the monitoring site within a monitoring space with reference to the monitoring site based on a detection result of the noise event detecting step (S10);
said noise monitoring method **characterized in** further comprising:
a determining step (S16) of identifying, when plural areas which correspond to sources of noises in the target area and differ in types of generating noises from each other are individually demarcated based on a relative positional relation with the monitoring site, and in the monitoring space the plural demarcated areas are defined, which are sources of noises of inherent types, as plural window areas (Wa, Wb, Wc) respectively which correspond individually thereto by using a range of an elevation angle from a horizontal plane set in the monitoring space with reference to the monitoring site and a range of an angle of direction relative to a reference azimuth set in the monitoring space with reference to the monitoring site, and when the arrival direction vector calculated by the calculating step (S14) is included more than or equal to a predetermined ratio threshold in the plurality of window areas (Wa, Wb, Wc), which of the window areas (Wa, Wb, Wc) includes the arrival direction vector at a highest ratio, and thereby determining that a noise of an inherent type has occurred in the area corresponding to the identified window area.

4. The noise monitoring method according to claim 3, **characterized in that** it further comprises:

a discriminating step (S18) of discriminating a noise coming to the monitoring site as a ground noise of an aircraft based on a positional relation between the arrival direction vector calculated by the calculating step (S 14) and the window areas (Wa, Wb, Wc).

**Patentansprüche**

1. Lärmüberwachungsvorrichtung (100), die Folgendes umfasst:

- ein Detektionsmittel (10) zum Detektieren, mit Bezug auf eine Überwachungsstelle, die in einem Zielbereich zum Überwachen von Lärmgeräuschen angeordnet ist, eines Lärms, der zu der Überwachungsstelle dringt;
- ein Lärmereignis-Detektionsmittel (102) zum Detektieren eines Lärmereignisses eines Einzelereignis-Lärms und/oder eines semi-stationären Lärms auf der Basis eines Detektionsergebnisses des Detektionsmittels (10);
- ein Berechnungsmittel (106) zum Berechnen eines Ankunftsrichtungsvektors eines Lärms, der innerhalb eines Überwachungsraums mit Bezug auf die Überwachungsstelle zu der Überwachungsstelle drang, auf der Basis eines Detektionsergebnisses des Lärmereignis-Detektionsmittels (102);
wobei die Lärmüberwachungsvorrichtung (100) des Weiteren **dadurch gekennzeichnet ist, dass** sie Folgendes umfasst:
- ein Fensterbereichs-Definierungsmittel (108) zum individuellen Demarkieren mehrerer Bereiche, die Lärmquellen in dem Zielbereich entsprechen und sich hinsichtlich der Arten der Entstehung von Lärmgeräuschen voneinander unterscheiden, auf der Basis einer relativen Positionsbeziehung zu der Überwachungsstelle, und Definieren, in dem Überwachungsraum, der mehreren demarkierten Bereiche, die Lärmquellen inhärenter Arten sind, als jeweilige mehrere Fensterbereiche (Wa, Wb, Wc), die individuell dazu entsprechen, unter Verwendung eines Bereichs eines Höhenwinkels von einer horizontalen Ebene aus, die in dem Überwachungsraum mit Bezug auf die Überwachungsstelle angeordnet ist, und eines Bereichs eines Richtungswinkels relativ zu einem Bezugsazimut, der in dem Überwachungsraum mit Bezug auf die Überwachungsstelle angeordnet ist; und
- ein Bestimmungsmittel (106) zum Identifizieren, wenn der durch das Berechnungsmittel (106) berechnete Ankunftsrichtungsvektor mindestens in Höhe einer zuvor festgelegten Verhältnisschwelle in den mehreren Fensterbereichen (Wa, Wb, Wc) enthalten ist, welcher der Fensterbereiche (Wa, Wb, Wc) den Ankunftsrichtungsvektor in einem höchsten Verhältnis umfasst, und dadurch Bestimmen, dass ein Lärm eines inhärenten Typs in dem Bereich, der dem identifizierten Fensterbereich entspricht, aufgetreten ist.

2. Lärmüberwachungsvorrichtung (100) nach Anspruch 1, **dadurch gekennzeichnet, dass** sie des Weiteren Folgendes umfasst:

- ein Unterscheidungsmittel (106) zum Unterscheiden eines Lärms, der als ein Bodenlärm eines Flugzeugs zu der Überwachungsstelle dringt, auf der Basis einer Positionsbeziehung zwischen dem durch das Berechnungsmittel (106) berechneten Ankunftsrichtungsvektor und den Fensterbereichen (Wa, Wb, Wc).

3. Lärmüberwachungsverfahren, das Folgendes umfasst:

- einen Detektionsschritt (S10) zum Detektieren, mit Bezug auf eine Überwachungsstelle, die in einem Zielbereich zum Überwachen von Lärmgeräuschen angeordnet ist, eines Lärms, der zu der Überwachungsstelle dringt;
- einen Lärmereignis-Detektionsschritt (S10) zum Detektieren eines Lärmereignisses eines Einzelereignis-Lärms und/oder eines semi-stationären Lärms auf der Basis eines Detektionsergebnisses des Detektionsschrittes (S10);
- einen Berechnungsschritt (S14) zum Berechnen eines Ankunftsrichtungsvektors eines Lärms, der innerhalb eines Überwachungsraums mit Bezug auf die Überwachungsstelle zu der Überwachungsstelle drang, auf der Basis eines Detektionsergebnisses des Lärmereignis-Detektionsschrittes (S10);
wobei das Lärmüberwachungsverfahren **dadurch gekennzeichnet ist, dass** es des Weiteren Folgendes umfasst:
- einen Bestimmungsschritt (S16) zum Identifizieren, wenn mehrere Bereiche, die Lärmquellen in dem Zielbereich entsprechen und sich hinsichtlich der Arten der Lärmerzeugung voneinander unterscheiden, auf der Basis einer relativen Positionsbeziehung zu der Überwachungsstelle individuell demarkiert werden, und in dem Überwachungsraum die mehreren demarkierten Bereiche, die Lärmquellen inhärenter Arten sind, als jeweilige mehrere Fensterbereiche (Wa, Wb, Wc), die individuell dazu entsprechen, unter Verwendung eines Bereichs eines Höhenwinkels von einer horizontalen Ebene aus, die in dem Überwachungsraum mit Bezug auf die Überwachungsstelle angeordnet ist, und eines Bereichs eines Richtungswinkels relativ zu einem Bezugsazimut, der in dem Überwachungsraum mit Bezug auf die Überwachungsstelle angeordnet ist, definiert werden, und wenn der durch den Berechnungsschritt (S14) berechnete Ankunftsrichtungsvektor mindestens in Höhe einer zuvor festgelegten Verhältnisschwelle in den mehreren Fensterbereichen (Wa, Wb, Wc) enthalten ist, welcher der Fensterbereiche (Wa, Wb, Wc) den Ankunftsrichtungsvektor mit einem höchsten Verhältnis umfasst, und dadurch Bestimmen, dass ein Lärm eines inhärenten Typs in dem Bereich, der dem identifizierten Fensterbereich entspricht, aufgetreten ist.

4. Lärmüberwachungsverfahren nach Anspruch 3, **dadurch gekennzeichnet, dass** es des Weiteren Folgendes umfasst:

- einen Unterscheidungsschritt (S18) zum Unterscheiden eines Lärms, der als ein Bodenlärm eines Flugzeugs zu der Überwachungsstelle dringt, auf der Basis einer Positionsbeziehung zwischen dem durch den Berechnungsschritt (S14) berechneten Ankunftsrichtungsvektor und den Fensterbereichen (Wa, Wb, Wc).

**Revendications**

1. Appareil de surveillance du bruit (100), comprenant :

- un moyen de détection (10) pour détecter, en référence à un site de surveillance situé dans une zone cible pour surveiller les bruits, un bruit arrivant sur le site de surveillance ;
- un moyen de détection d'événement de bruit (102) pour détecter un événement de bruit d'un événement de bruit unique et/ou un bruit semi-fixe sur la base d'un résultat de détection du moyen de détection (10) ;
- un moyen de calcul (106) pour calculer un vecteur de direction d'arrivée d'un bruit qui est arrivé sur le site de surveillance dans un espace de surveillance en référence au site de surveillance sur la base d'un résultat de détection du moyen de détection d'événement de bruit (102) ;
ledit appareil de surveillance de bruit (100) étant **caractérisé en ce qu'**il comprend en outre :

- un moyen de définition de zone de fenêtre (108) pour délimiter individuellement une pluralité de zones qui correspondent à des sources de bruits dans la zone cible et diffèrent en types de génération de bruits les unes des autres sur la base d'une relation de position relative avec le site de surveillance, et définir dans l'espace de surveillance la pluralité des zones délimitées, qui sont des sources de bruits de types inhérents, en tant que pluralité de zones de fenêtre (Wa, Wb, Wc), respectivement, qui correspondent individuellement à celles-ci en utilisant une plage d'un angle d'élévation par rapport à un plan horizontal situé dans l'espace de surveillance en référence au site de surveillance et une plage d'un angle de direction par rapport à un azimut de référence situé dans l'espace de surveillance en référence au site de surveillance ; et

- un moyen de détermination (106) pour identifier, lorsque le vecteur de direction d'arrivée calculé par le moyen de calcul (106) est inclus à un niveau supérieur ou égal à un seuil de rapport prédéterminé dans la pluralité de zones de fenêtre (Wa, Wb, Wc), laquelle des zones de fenêtre (Wa, Wb, Wc) inclut le vecteur de direction d'arrivée à un rapport le plus élevé, et déterminer ainsi qu'un bruit d'un type inhérent s'est produit dans la zone correspondant à la zone de fenêtre identifiée.

2. Appareil de surveillance de bruit (100) selon la revendication 1, **caractérisé en ce qu'**il comprend en outre :

- un moyen de distinction (106) pour distinguer un bruit arrivant sur le site de surveillance en tant que bruit de fond d'un aéronef sur la base d'une relation de position entre le vecteur de direction d'arrivée calculé par le moyen de calcul (106) et les zones de fenêtre (Wa, Wb, Wc).

3. Procédé de surveillance de bruit, comprenant :

- une étape de détection (S10) pour détecter, en référence à un site de surveillance situé dans une zone cible pour surveiller des bruits, un bruit arrivant sur le site de surveillance ;
- une étape de détection d'événement de bruit (S10) pour détecter un événement de bruit d'un événement de bruit unique et/ou un bruit semi-fixe sur la base d'un résultat de détection de l'étape de détection (S10) ;
- une étape de calcul (S14) pour calculer un vecteur de direction d'arrivée d'un bruit qui est arrivé sur le site de surveillance dans un espace de surveillance en référence au site de surveillance sur la base d'un résultat de détection de l'étape de détection d'événement de bruit (S10) ;
ledit procédé de surveillance de bruit étant **caractérisé en outre en ce qu'**il comprend :

- une étape de détermination (S16) pour identifier, lorsqu'une pluralité de zones qui correspondent à des sources de bruits dans la zone cible et diffèrent en types de génération de bruits les unes des autres sont délimitées individuellement sur la base d'une relation de position relative avec le site de surveillance, et dans l'espace de surveillance la pluralité de zones délimitées, qui sont des sources de bruits de types inhérents, sont définies en tant que pluralité de zones de fenêtre (Wa, Wb, Wc), respectivement, qui correspondent individuellement à celles-ci en utilisant une plage d'un angle d'élévation par rapport à un plan horizontal situé dans l'espace de surveillance en référence au site de surveillance et une plage d'un angle de direction par rapport à un azimut de référence situé dans l'espace de surveillance en référence au site de surveillance, et lorsque le vecteur de direction d'arrivée calculé par l'étape de calcul (S14) est inclus à un niveau supérieur ou égal à un seuil de rapport prédéterminé dans la pluralité de zones de fenêtre (Wa, Wb, Wc), laquelle des zones de fenêtre (Wa, Wb, Wc) inclut le vecteur de direction d'arrivée à un rapport le plus élevé, et déterminer ainsi qu'un bruit d'un type inhérent s'est produit dans la zone correspondant à la zone de fenêtre identifiée.

4. Procédé de surveillance de bruit selon la revendication 3, **caractérisé en ce qu'**il comprend en outre :

- une étape de distinction (S18) pour distinguer un bruit arrivant sur le site de surveillance en tant que bruit de fond d'un aéronef sur la base d'une relation de position entre le vecteur de direction d'arrivée calculé par l'étape de calcul (S14) et les zones de fenêtre (Wa, Wb, Wc).

FIG.1

FIG.2

EP 2 687 831 B1

FIG.3

FIG.4

FIG.5

START

NOISE EVENT
DETECTION PROCESSING ⌐S10

ARRIVAL DIRECTION
VECTOR DISCRIMINATION ⌐S14
PROCESSING

S16

DOES WINDOW
DETERMINATION APPLY? No

Yes S18 S20

DISCRIMINATION OF
AIRCRAFT GROUND NOISE

DISCRIMINATION OF
AIRCRAFT FLYOVER NOISE
OR OTHER NOISE

END

FIG.6

FIG.7A

90° (ELEVATION ANGLE)

VS

0°

90°
(ANGLE OF
DIRECTION)

A1

P

270°
(ANGLE OF
DIRECTION)

A3

A2

180°
(ANGLE OF
DIRECTION)

−90° (ELEVATION ANGLE)

FIG.7B

A1

A3

A2    ANGLE OF DIRECTION [deg]

**REFERENCES CITED IN THE DESCRIPTION**

**Patent documents cited in the description**

- JP 2006038772 A
- JP H09105667 A
- JP H743203 B